# EUROPEAN PATENT SPECIFICATION

(11) **EP 3 094 046 B1**
(45) Date of publication and mention of the grant of the patent: **20.11.2019**
(21) Application number: 16154464.8
(22) Date of filing: 21.08.2007
(51) Int. Cl.: H04L 12/12, H04L 12/28, H04L 29/08

(54) **APPARATUS AND METHOD FOR MATCHING PROTOCOLS OF EMBEDDED AUDIO/VIDEO CONTENTS**
VORRICHTUNG UND VERFAHREN ZUR ANPASSUNG VON PROTOKOLLEN VON EINGEBETTETEN AUDIO/VIDEO-INHALTEN
APPAREIL ET PROCÉDÉ PERMETTANT DE METTRE EN CORRESPONDANCE DES PROTOCOLES DE CONTENUS AUDIO/VIDÉO INTÉGRÉS

(30) Priority: 25.08.2006 US 840043 P; 09.01.2007 KR 20070002582
(43) Date of publication of application: 16.11.2016
(62) Divisional of application: 07793590.6
(73) Proprietor: Samsung Electronics Co., Ltd., Gyeonggi-do 16677 (KR)
(72) Inventor: JUNG, Dong-Shin, 441-718 Gyeonggi-do (KR); LEE, Joo-Yeol, 137-072 Seoul (KR); OH, Seung-Jae, 135-796 Seoul (KR); HAN, Se-Hee, 136-749 Seoul (KR); KWON, Won-Seok, 443-745 Gyeonggi-do (KR)
(74) Representative: Land, Addick Adrianus Gosling

(56) References cited:
- EP-A1- 1 612 685
- WO-A1-02/01833
- US-A1- 2005 138 192
- WALKER M R ET AL: "Remote I/O: Freeing the Experience from the Platform with UPnP Architecture", INTEL TECHNOLOGY JOURNAL, XX, US, vol. 6, no. 4, 15 November 2002 (2002-11-15), pages 30-36, XP002304265,

## Description

### Technical Field

Methods and apparatuses consistent with the present invention relate to a remote user interface (RUI) technology on a home network, and more particularly, to matching protocols of embedded audio/video (AV) contents, and enabling RUI devices to simultaneously perform a protocol matching process for AV contents embedded in user interface (UI) data and a profile matching process.

### Background Art

When AV contents embedded in UI data are reproduced, a protocol matching process for the AV contents is additionally required between conventional RUIs. The AV contents may be video, audio, and image tags included in hypertext markup language (HTML) pages.

Document EP1612685A1 describe a home networking method comprising the steps when the client sends a content request specifying a channel list URL to the server, the client can obtain the channel contents that are listed in the channel list, that is, the client can collectively obtain the control right of the contents corresponding to the channels listed in the channel list.

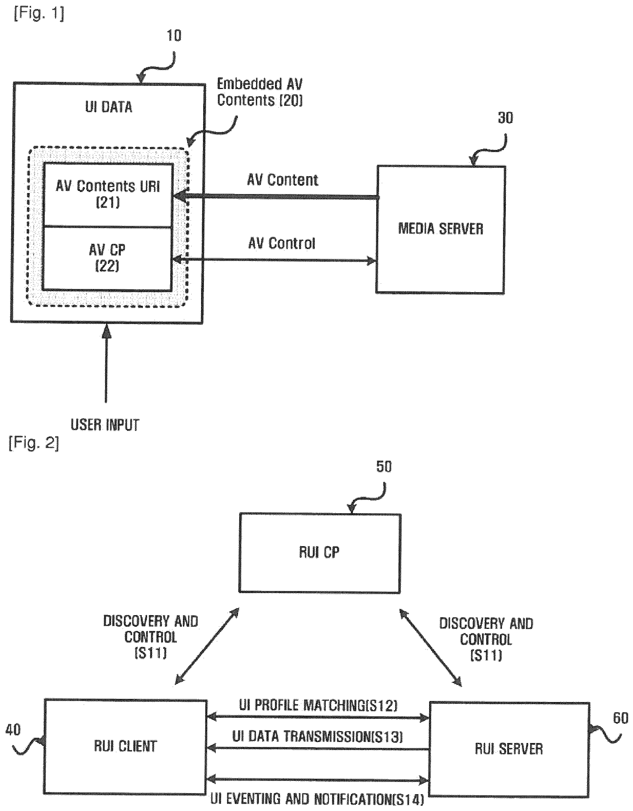

FIG. 1 illustrates a related art structure of UI data transmitted to an RUI client. The UI data 10 includes various forms of objects. Embedded AV contents 20 are a form of the objects. The embedded AV contents 20 may be divided into AV contents uniform resource identifier (URI) 21, which is location information required to retrieve AV contents, and universal plug and play (UPnP) AV control point (CP) module 22 which performs UPnP-based AV control. The UI data 10 receives a control command from a user and processes the control command. The control command may be for reproducing the AV contents or stopping the reproduction of the AV contents. A major example of the UI data 10 may be a web page displayed using a web browser on the Internet.

The AV contents 20 embedded in the UI data 10 in the form of an object tag may be included in UI data used for extensible hypertext markup language (XHTML)-based RUI related standards, such as Consumer Electronics Association (CEA)-2014. The object tag may include param elements, and additional information of AV contents corresponding to an object may be provided using these elements.

RUI devices include an RUI server and an RUI client. A device description of the RUI server includes a <rui:uiServerInfo> tag which is information regarding the RUI server. A uniform resource locator (URL) described in <rui:uiListURL> of the < rui:uiServerInfo> tag indicates an extensible markup language (XML) file, and profile matching is performed based on profiles included in the XML file. In this case, < rui:uiListURL> may include information on ui_profile name, audio_profile name, and video_profile name.

Similarly, a device description of the RUI client includes a <rui:uiClientlnfo> tag which is information regarding the RUI client. The <rui:uiClientInfo> tag may have one or more profile lists, and each profile list may include profile name, aspect ratio, and transport.

FIG. 2 illustrates a related art profile matching process between RUI devices. An RUI CP 50 performs discovery and control operations on an RUI client 40 and an RUI server 60 (operation SI 1). The RUI client 40 identifies a ui profile that can be provided to the RUI server 60, and determines whether the ui profile is included in a profile list of the RUI server 60. That is, the RUI client 40 performs a UI profile matching process (operation S 12). If the profile matching process is completed, UI data is transmitted from the RUI server 60 to the RUI client 40 (operation S13). Accordingly, the RUI server 60 receives a request from the RUI client 40 to process an event, processes the event, and notifies the RUI client 40 of the result of event processing (operation S 14). A control command for reproducing AV contents included in the UI data or stopping the reproduction of the AV contents is executed, when a protocol matching process for the AV contents, which will be described later, is performed.

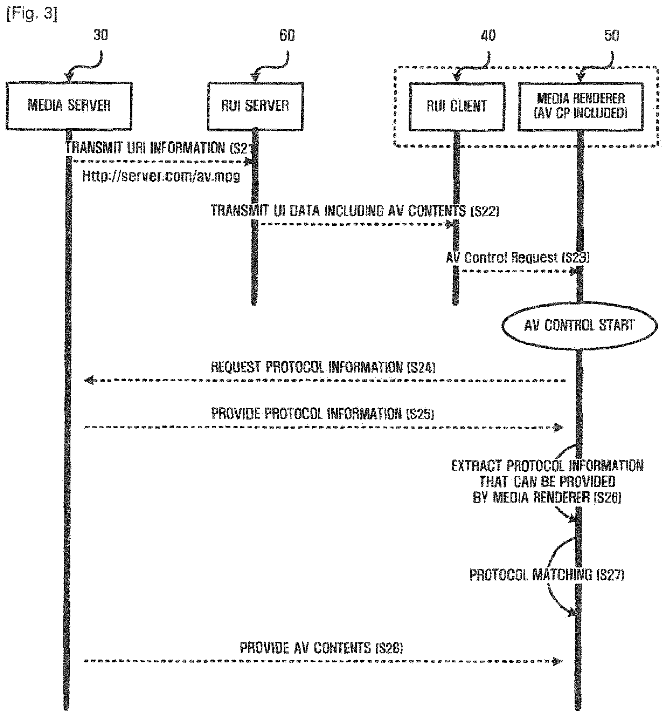

FIG. 3 illustrates a related art process of matching protocols of AV contents between RUI devices.

After the profile matching process in FIG. 2 is completed, an RUI server 60 obtains URI information used to access AV contents from a media server 30 before creating UI data 10 (operation S21). The method of obtaining the URI information may vary according to how the media server 30 and the RUI server 60 are implemented. An example of the URI information may be http://server.com/av.mpg. The UI data 10 includes the AV contents having the URI information and is transmitted from the RUI server 60 to an RUI client 40 (operation S22). Then, the RUI client 40 provides the UI data 10 to a user through a rendering process. The user inputs a control command to the RUI client 40 in order to request an AV CP 50 to control the AV contents (operation S23). At the request of the user, the AV CP 50 included in a media renderer starts AV contents control. Although the media renderer and the AV CP 50 are not the same devices, they may be implemented as a single device as illustrated in FIG. 3. Alternatively, they may be implemented as separate devices.

When starting the AV contents control, the AV CP 50 requests the media server 30 to provide protocol information (operation S24). In response to the request, the media server 30 provides the protocol information to the AV CP 50 (operation S25). The AV CP 50 extracts protocol information from the media renderer (operation S26), and matches the extracted protocol information with the protocol information provided by the media server 30 (operation S27). If this protocol matching process is completed, the AV CP 50 retrieves the AV contents from the media server 30 using the URI in-formation of the AV contents included in the UI data 10 (operation S28), thereby performing the AV contents control desired by the user. Disclosure of Invention Technical Problem

However, according to the above related art method, the RUI devices must separately perform a profile matching process to transmit UI data and perform a protocol matching process for AV contents included in the UI data. Therefore, if n pieces of AV contents are included in the UI data, the process of extracting protocol information must be performed a maximum of n times for each piece of AV contents through a network. Consequently, the speed of controlling the AV contents may be reduced, and network traffic may be severely increased. Technical Solution

The present invention provides a system and method for matching protocols of embedded AV contents, the system and method capable of improving a related art method of separately performing a protocol matching process, in which it is determined whether AV contents included in UI data can be controlled, and a UI profile matching process, simultaneously performing the UI profile matching process and the protocol matching process for the AV contents, thereby omitting an additional process of extracting protocol information when the AV contents are actually controlled, and enhancing the efficiency of the protocol matching process for the AV contents.

According to an aspect of the present invention, there is provided a system for matching protocols of embedded AV contents. The server includes an RUI server which receives URI information of AV contents embedded in UI data and protocol information of the AV contents; an RUI client which receives the UI data, which was created using the URI information and the protocol information, from the RUI server; and an AV CP which receives the protocol information and a control request command for the AV contents from the RUI client, matches protocol information obtained from a media renderer with the protocol information received from the RUI client, and performs a control operation on the AV contents.

According to another aspect of the present invention, there is provided a method of matching protocols of embedded AV contents. The method includes receiving URI information of AV contents embedded in UI data and protocol information of the AV contents using an RUI server; transmitting the UI data, which was created using the URI information and the protocol information, from the RUI server to an RUI client; and parsing the URI information and the protocol information of the AV contents embedded in the UI data, and storing the URI information and the protocol information using the RUI client

The invention is carried out according to the appended independent claims. Optional features of the invention are carried out according to the dependent claims. However, technical descriptions of systems, apparatus, products and/or methods in the description and/or drawings which are not covered by the claims are presented not as embodiments of the invention but as background art or examples useful for understanding the invention.

### Brief Description of the Drawings

The above and other aspects of the present invention will become more apparent by describing in detail exemplary embodiments thereof with reference to the attached drawings in which:
FIG. 1 illustrates a related art structure of UI data transmitted to an RUI client;
FIG. 2 illustrates a related art profile matching process between RUI devices;
FIG. 3 illustrates a related art process of matching protocols of AV contents between RUI devices;
FIG. 4 illustrates a configuration of embedded AV contents which include protocol information according to an exemplary embodiment of the present invention;
FIG. 5 illustrates a configuration of an apparatus for matching protocols of embedded AV contents according to an exemplary embodiment of the present invention;
FIG. 6 illustrates a structure of a cache unit which stores protocol information according to an exemplary embodiment of the present invention;
FIG. 7 is a conceptual diagram illustrating a process of matching protocols of embedded AV contents according to an exemplary embodiment of the present invention; and
FIG. 8 is a flowchart illustrating a method of matching protocols of embedded AV contents according to an exemplary embodiment of the present invention. Mode for the Invention

The present invention will now be described more fully with reference to the accompanying drawings, in which exemplary embodiments of the present invention are shown. The present invention may, however, be embodied in many different forms and should not be construed as being limited to the exemplary embodiments set forth herein; rather, these exemplary embodiments are provided so that this disclosure will be thorough and complete, and will fully convey the concept of the invention to those skilled in the art. Like reference numerals in the drawings denote like elements, and thus their description will be omitted.

A system and method for matching protocols of embedded AV contents according to exemplary embodiments of the present invention will hereinafter be described in detail with reference to the accompanying drawings.

For convenience, a UPnP RUI system, which is an application of UPnP, will mainly be described in the exemplary embodiments of the present invention. In addition, devices for implementing the present invention will be named after devices defined in UPnP RUI specifications. However, it is obvious to those of ordinary skill in the art that the scope of the present invention will not be affected by the home network system and the names of the devices.

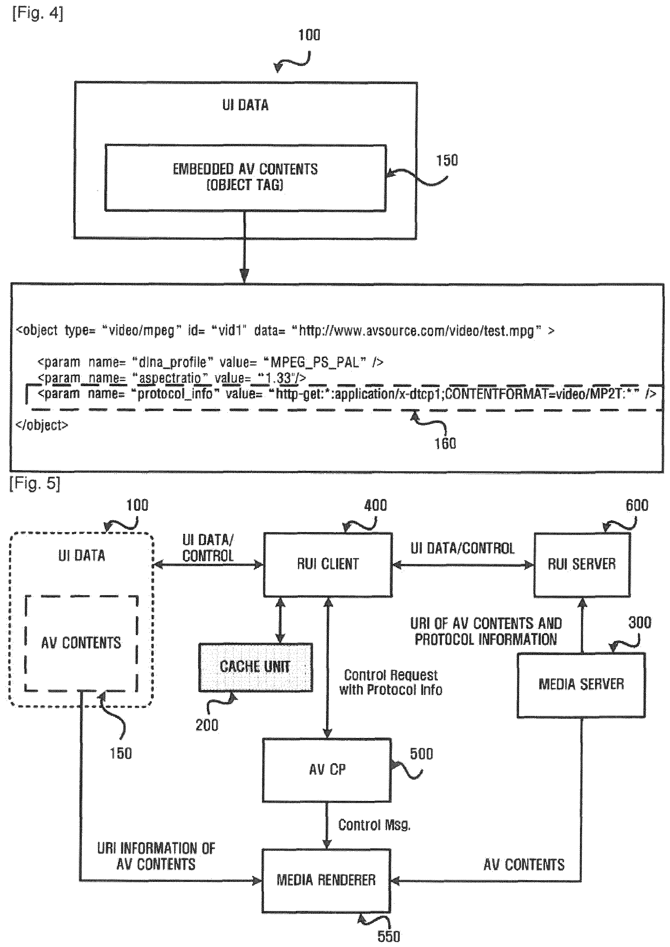

FIG. 4 illustrates a configuration of embedded AV contents which include protocol information according to an exemplary embodiment of the present invention. Referring to FIG. 4, UI data 100 has embedded AV contents 150, and an element of an object tag that forms the embedded AV contents 150 additionally defines protocol information 160 defined in UPnP AV specifications. Therefore, exemplary embodiments of the present invention, which will be described later, can be applied without modifying the UPnP AV specifications.

FIG. 5 illustrates a configuration of an apparatus for matching protocols of embedded AV contents. Referring to FIG. 5, the apparatus includes an RUI client 400 connected to a cache unit 200, an RUI server 600, a media server 300, an AV CP 500, and a media renderer 550.

The RUI server 600 receives URI information of AV contents 150 embedded in UI data 100 and protocol information of the AV contents 150 from the separate media server 300 that stores AV contents. The RUI server 600 is one of controlled devices defined in the UPnP AV specifications. Like a desktop personal computer (PC) or a notebook PC, the RUI server 600 can generate a UI event and store UI data. A protocol of the AV contents 150 is a rule used by the RUI client 400 to output the UI data 100 of the RUI server 600. Examples of the protocol may include remote desktop protocol (RDP), hypertext transfer protocol (HTTP), and expandable home theater (XHT). The RUI server 600 and the media server 300 may be implemented as a single device or as separate devices.

The RUI client 400 receives the UI data 100 from the RUI server 600. The UI data 100 may be created using the URI information and the protocol information. The RUI client 400 is another controlled device defined in the UPnP AV specifications. The RUI client 400 may be a PC located at a different place and thus remotely controlled by a desktop PC or a notebook PC, which may be the RUI server 600, or may be a digital television (TV) displaying the UI event.

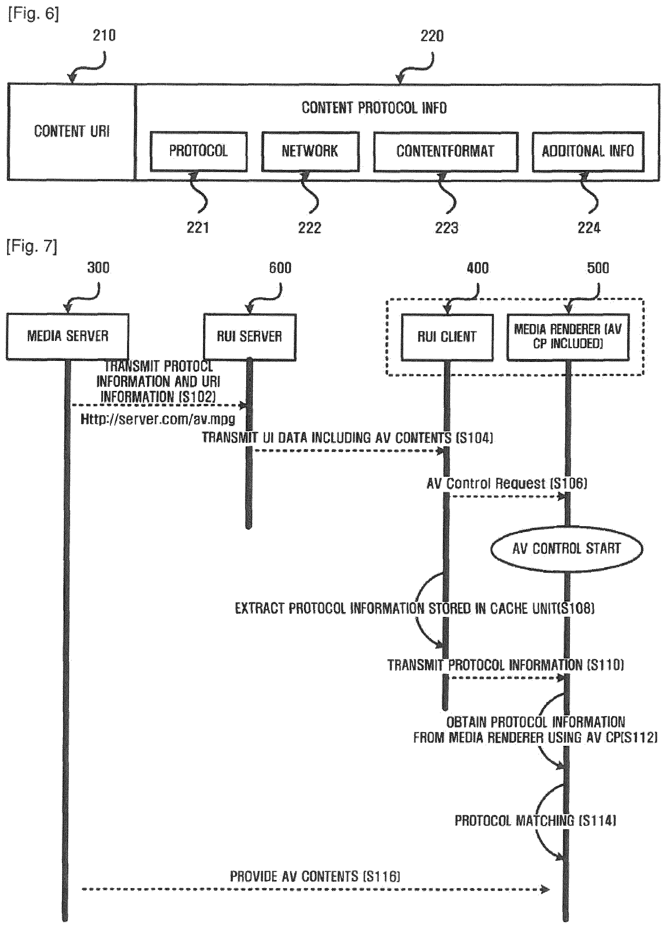

After receiving the UI data 100 from the RUI server 600, the RUI client 400 parses the URI and protocol information of the AV contents 150 embedded in the UI data 100, and stores the parsed URI and protocol information in the cache unit 200. Later, when requested by the AV CP 500, the cache unit 200 provides the stored protocol information. The cache unit 200 may include a separate local storage region (not shown), and the protocol information may be stored in the cache unit 200 in the form of a mapping table, which will now be described with reference to FIG. 6.

FIG. 6 illustrates a structure of a cache unit which stores protocol information according to an exemplary embodiment of the present invention. The cache unit 200 stores data in the form of a mapping table, and the data is composed of content URI 210 and content protocol information 220. The content protocol information 220 is divided into protocol 221, network 222, contentformat 223 and additionalinfo 224, and stored accordingly. For example, protocol information expressed as "http-get:*:application/x-dtcpl;CONTENTFORMAT=video/MP2T:*" is divided into protocol, network, format and additionalinfo, and stored accordingly.

Referring back to FIG. 5, the RUI client 400 may have one or more profile lists in a tag (e.g., <rui:uiClientInfo> that represents information regarding the RUI client 400. Each of the profile lists may be composed of profile information of ui, audio and video. In particular, the profile information of the video may specify profile name, aspect ratio, and transport. The transport may be represented by a series of space separated values. Therefore, a transport may be selected from one or more transports and used accordingly, and such selection is performed by the AV CP 500, when the AV contents are controlled.

A user may input a control command for, for example, reproducing or recording the AV contents included in the UI data 100 to the RUI client 400. After receiving the control command from the user, the RUI client 400 extracts protocol information corresponding to the AV contents from the cache unit 200. The extracted protocol information is transmitted to the AV CP 500, together with the control command.

The AV CP 500 is a control point defined in the UPnP AV specifications. Unlike the related art RUI CP 50 illustrated in FIG. 2, the AV CP 500 controls AV contents. That is, the AV CP 500 receives the control command for the protocol information and the AV contents from the RUI client 400, and matches protocol information obtained from the media renderer 550 with the protocol information received from the RUI client 400, thereby controlling the AV contents. Based on the matching result, the AV CP 500 transmits a control message to the media renderer 550 in order to control the media renderer 550 to retrieve the AV contents from the media server 300 and reproduce or record the retrieved AV contents. After receiving the control message, the media renderer 550 may retrieve the AV contents from the media server 300. However, the media renderer 550 may also retrieve the URI information of the AV contents from the UI data 100 and control the AV contents.

The AV CP 500 and the media renderer 550 may be implemented as a single device. Alternatively, the AV CP 500 and the RUI client 400 may be implemented as a single device. The RUI client 400, the media renderer 550, and the AV CP 500 may all be implemented as a single device, or may be implemented as separate devices.

FIG. 7 is a conceptual diagram illustrating a process of matching protocols of embedded AV contents according to an exemplary embodiment of the present invention.

The protocol matching process according to this exemplary embodiment is a combination of a protocol matching method defined in the related art UPnP AV specifications and a profile matching process between RUI devices. When UI profile matching is performed, protocol matching is also performed, which will now be described with reference to FIG. 7.

Referring to FIG. 7, a media server 300 storing AV contents transmits URI information and protocol information of the AV contents required to create UI data to an RUI server 600 (operation S 102). The URI information may be expressed as "http://server.com/av.mpg," and the protocol information may be expressed as "http- get: *:application/x-dtcp1;CONTENTFORM AT=video/MP2T: *."

The RUI server 600 creates the UI data using the received URI and protocol information, and transmits the created UI data to an RUI client 400 (operation S 104). Here, embedded AV contents are also transmitted. The RUI client 400 parses the received protocol information, and stores the parsed protocol information in a cache unit 200. A method of storing the parsed protocol information in the cache unit 200 is the same as described above, and thus a detailed description thereof will be omitted.

If a user inputs a control command for executing, stopping or recording AV contents to the RUI client 400, the RUI client 400 requests an AV CP 500 to execute the control command (operation S 106). Accordingly, a control operation of the AV contents is started. The RUI client 400 retrieves protocol information corresponding to the AV contents from the cache unit 200 (operation S 108), and transmits the retrieved protocol information to the AV CP 500 (operation S1 10).

After receiving the protocol information, the AV CP 500 extracts protocol information of a media renderer in order to identify whether the media renderer is capable of rendering the AV contents (operation S 112). Here, the AV CP 500 and the media renderer may be implemented as a single device or as separate devices. This extraction process may vary according to how the AV CP 500 and the media renderer are implemented.

The AV CP 500 compares the protocol information obtained from the media renderer with the protocol information received from the RUI client 400, thereby performing protocol matching (operation S114). Based on the protocol matching result, the AV CP 500 can determine whether the media renderer is capable of performing the control operation, such as rendering of the AV contents. If it is determined that the media renderer can perform a specific control operation, the AV CP 500 receives the AV contents from the media server 300 (operation S116), and transmits the received AV contents to the media renderer.

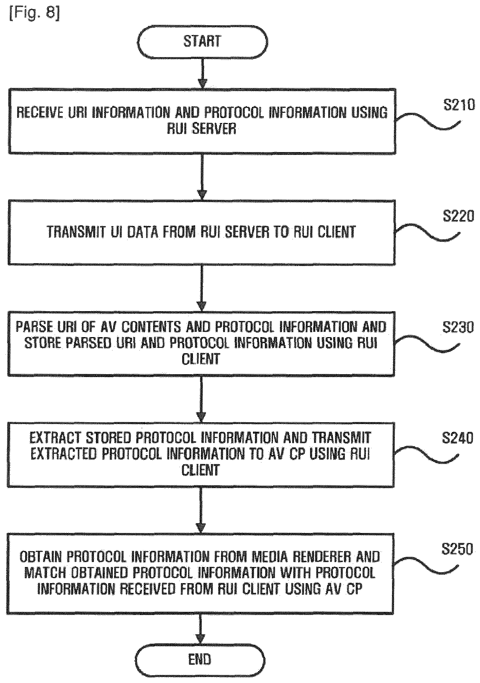

FIG. 8 is a flowchart illustrating a method of matching protocols of embedded AV contents according to an exemplary embodiment of the present invention.

Referring to FIG. 8, the RUI server 600 receives URI information and protocol in-formation of AV contents from the separate media server 300 (operation S210). The RUI server 600 creates UI data using the received URI and protocol information, and transmits the created UI data to the RUI client 400 (operation S220).

Then, the RUI client 400 parses the URI and protocol information of the AV contents from the received UI data, and stores them in the cache unit 200 (operation S230). Here, the cache unit 200 may divide the protocol information into protocol, network, format and additionalinfo, and store them in the form of a mapping table.

The RUI client 400 receives a control command for the AV contents from a user. After receiving the control command, the RUI client 400 extracts protocol information corresponding to the AV contents from the cache unit 200, and transmits the control command and the extracted protocol information to the AV CP 500 (operation S240).

The AV CP 500 obtains protocol information of the AV contents from a media renderer, and performs a protocol matching operation in which the obtained protocol information is compared with the protocol information received from the RUI client 400 (operation S250). Based on the matching result, the AV CP 500 may retrieve the AV contents from the media server 300 and reproduce the retrieved AV contents.

It is obvious to those of ordinary skill in the art that the scope of the method of matching protocols of embedded AV contents according to the present invention extends to a computer readable recording medium on which a computer program for executing the above method is recorded. Industrial Applicability

As described above, a system and method according to exemplary embodiments of the present invention provides at least one of the following advantages.

RUI devices, which transmit and receive UI data based on UPnP AV architecture, do not repeatedly perform a protocol matching process for AV contents embedded in the UI data whenever the AV contents are controlled. Instead, the RUI devices extract protocol information of the AV contents in advance when a UI profile matching process is performed, and store the extracted protocol information in an RUI client. Therefore, the speed of controlling the AV contents can be increased.

Since unnecessary network traffic caused by the extraction of protocol information whenever AV contents are controlled is reduced, the overall network efficiency can be enhanced.

Furthermore, an element of an object tag is additionally defined when UI data is configured. Therefore, the present invention can be implemented without modifying UPnP AV specifications.

However, the effects of the present invention are not restricted to the one set forth herein. The above and other effects of the present invention will become more apparent to one of ordinary skill in the art to which the present invention pertains by referencing the claims.

## Claims

1. A method of matching protocols of embedded audio/video, AV, contents stored by a media server (300), the method comprising:
receiving (S210), by a remote user interface, RUI, server, uniform resource identifier, URI, information of AV contents and protocol information of the AV contents from the media server (300);
creating, by the RUI server (600), user interface, UI, data using the received URI and protocol information;
transmitting (S220) the UI data from the RUI server to an RUI client (400);
parsing (S230), by the RUI client (400), the URI information and the protocol information of the AV contents embedded in the UI data;
storing (S230), by the RUI client (400), the parsed URI information and the parsed protocol information in a cache unit (200) of the RUI client (400);
receiving, by the RUI client (400) of a control command for the AV contents from a user;
extracting (S240), by the RUI client, protocol information corresponding to the AV contents from the cache unit (200);
transmitting (S240), by the RUI client, the control command and the extracted protocol information to an AV control point, CP,
obtaining (S250), by the AV CP (500), protocol information of the AV contents from a media renderer;
performing (S250), by the AV CP, a protocol matching operation in which the obtained protocol information is compared with the protocol information received from the RUI client (400);
retrieving, by the AV CP (500), the AV contents from the media server (300) and reproducing the retrieved AV contents based on the result of the matching operation,
wherein the AV CP and the media renderer are implemented as a first single device, the AV CP and the RUI client are implemented as a second device or the AV CP, the RUI client and the media renderer implemented as a third single device, and
wherein the RUI server and the media server are implemented as fourth single device.

2. The method of claim 1, wherein a system according to claim 6 is used.

3. The method of claim 1 or 2, wherein the receiving the URI information of the AV contents comprises receiving the URI information and the protocol information from a media server, which stores multimedia contents, using the RUI server.

4. The method of claim 1, 2 or 3, wherein the RUI client has at least one profile lists in a tag representing information regarding the RUI client, and each of the profile lists comprises profile information of ui, audio and video, and/or wherein the profile information of the video comprises profile name, aspect "ratio and transport.

5. The method of any one of claims 1-4, wherein the parsing the URI information and the protocol information of the AV contents comprises generating a cache and storing the URI information and the protocol information in the cache in a form of a mapping table using the RUI client, and the protocol information is divided into protocol, network, format and additional info and stored accordingly.

6. A system for matching protocols of embedded audio/video, AV, contents, the apparatus comprising:
a remote user interface, RUI, server (600) which receives uniform resource identifier, URI, information of AV contents embedded in user interface, UI, data and protocol information of the AV contents;
an RUI client (400) which receives the UI data from the RUI server (600), the UI data being created using the URI information and the protocol information; and
an AV control point, CP, which receives the protocol information and a control request command for the AV contents from the RUI client (400), matches protocol information obtained from a media renderer (500) with the protocol information received from the RUI client simultaneously, and performs a control operation on the AV contents,
wherein the RUI client (600) comprises a cache unit (200) which parses the URI information and the protocol information of the AV contents embedded in the UI data received from the RUI server, and stores the URI information and the protocol information,
wherein the AV CP and the media renderer are implemented as a first single device (500), the AV CP and the RUI client are implemented as a second single device or the AV CP, the RUI client and the media renderer implemented as a third single device, and
wherein the RUI server (600) and the media server (300) are implemented as a fourth single device,
further comprising a media server which stores multimedia contents, wherein the RUI server receives the URI information and the protocol information from the media server.

## Patentansprüche

1. Verfahren zur Anpassung von Protokollen von eingebetteten Audio/Video-Inhalten (AV-Inhalten), die durch einen Medienserver (300) gespeichert wurden, wobei das Verfahren Folgendes umfasst:
Empfangen (S210), durch einen RUI-Server (Remote User Interface, Fernbenutzer-Schnittstellenserver), von URI-Informationen (Uniform Resource Identifier, einheitliche Ressourcenkennung) von AV-Inhalten sowie von Protokollinformationen der AV-Inhalte aus dem Medienserver (300);
Erzeugen, durch den RUI-Server (600), von UI-Daten (User Interface, Benutzerschnittstelle) unter Verwendung der empfangenen URI- und Protokollinformationen;
Übertragen (S220) der UI-Daten von dem RUI-Server an einen RUI-Client (400);
Analysieren (S230), durch den RUI-Client (400), der URI-Informationen und der Protokollinformationen der in den UI-Daten eingebetteten AV-Inhalte;
Speichern (S230), durch den RUI-Client (400), der analysierten URI-Informationen und der analysierten Protokollinformationen in einer Zwischenspeichereinheit (200) des RUI-Client (400);
Empfangen, durch den RUI-Client (400), eines von einem Benutzer stammenden Steuerbefehls für die AV-Inhalte;
Extrahieren (S240), durch den RUI-Client (400), von den AV-Inhalten entsprechenden Protokollinformationen aus der Zwischenspeichereinheit (200);
Übertragen (S240), durch den RUI-Client, des Steuerbefehls und der extrahierten Protokollinformationen an einen AV-Kontrollpunkt (AV-CP, Control Point);
Erhalten (S250), durch den AV-CP (500), von Protokollinformationen der AV-Inhalte aus einem Medienrenderer;
Durchführen (S250), durch den AV-CP, eines Protokollanpassungsvorgangs, bei dem die erhaltenen Protokollinformationen mit den empfangenen, von dem RUI-Client (400) stammenden Protokollinformationen verglichen werden;
Abrufen, durch den AV-CP (500), der AV-Inhalte aus dem Medienserver (300) und Wiedergeben der abgerufenen AV-Inhalte basierend auf dem Ergebnis des Anpassungsvorgangs,
wobei der AV-CP und der Medienrenderer als eine erste einzelne Vorrichtung implementiert sind, der AV-CP und der RUI-Client als eine zweite Vorrichtung implementiert sind, oder der AV-CP, der RUI-Client und der Medienrenderer als eine dritte einzelne Vorrichtung implementiert sind, und wobei der RUI-Server und der Medienserver als eine vierte einzelne Vorrichtung implementiert sind.

2. Verfahren nach Anspruch 1, wobei ein System nach Anspruch 6 verwendet wird.

3. Verfahren nach Anspruch 1 oder 2, wobei das Empfangen der URI-Informationen der AV-Inhalte Folgendes umfasst: Empfangen der URI-Informationen und der Protokollinformationen aus einem Medienserver, auf dem Multimediainhalte gespeichert sind, unter Verwendung des RUI-Servers.

4. Verfahren nach Anspruch 1, 2 oder 3, wobei der RUI-Client wenigstens eine Profilliste in einem Tag aufweist, die Informationen in Bezug auf den RUI-Client darstellt, wobei jede der Profillisten UI-, Audio- und Video-Profilinformationen umfasst, und/oder wobei die Profilinformationen des Videos Profilnamen, Größenverhältnis und Transport umfassen.

5. Verfahren nach einem der Ansprüche 1 bis 4, wobei das Analysieren der URI-Informationen und der Protokollinformationen der AV-Inhalte Folgendes umfasst: Erzeugen eines Zwischenspeichers und Speichern der URI-Informationen und der Protokollinformationen in dem Zwischenspeicher in Form einer Abbildungstabelle unter Verwendung des RUI-Client, und wobei die Protokollinformationen in Protokoll, Netzwerk, Format und Zusatzinformationen unterteilt und entsprechend gespeichert werden.

6. System zur Anpassung von Protokollen von eingebetteten Audio/Video-Inhalten (AV-Inhalten), wobei das System Folgendes umfasst:
einen RUI-Server (Remote User Interface, Fernbenutzer-Schnittstellenserver) (600), der URI-Informationen (Uniform Resource Identifier, einheitliche Ressourcenkennung) von in UI-Daten (User Interface, Benutzerschnittstelle) eingebetteten AV-Inhalten sowie Protokollinformationen der AV-Inhalte empfängt;
einen RUI-Client (400), der die UI-Daten aus dem RUI-Server (600) empfängt, wobei die UI-Daten unter Verwendung der URI-Informationen und der Protokollinformationen erzeugt werden; und
einen AV-Kontrollpunkt (AV-CP), der die Protokollinformationen und einen Steueranforderungsbefehl für die AV-Inhalte aus dem RUI-Client (400) empfängt, gleichzeitig aus einem Medienrenderer (500) erhaltene Protokollinformationen mit den aus dem RUI-Client empfangenen Protokollinformationen abstimmt, und einen Steuervorgang an den AV-Inhalten durchführt,
wobei der RUI-Client (600) eine Zwischenspeichereinheit (200) umfasst, die die URI-Informationen und die Protokollinformationen der in den aus dem RUI-Server empfangenen UI-Daten eingebetteten AV-Inhalte analysiert und die URI-Informationen und die Protokollinformationen speichert.
wobei der AV-CP und der Medienrenderer als eine erste einzelne Vorrichtung (500) implementiert sind,
wobei der AV-CP und der RUI-Client als eine zweite einzelne Vorrichtung implementiert sind, oder der AV-CP, der RUI-Client und der Medienrenderer als eine dritte einzelne Vorrichtung implementiert sind, und
wobei der RUI-Client (600) und der Medienrenderer (300) als eine vierte einzelne Vorrichtung implementiert sind,
weiterhin umfassend einen Medienserver, in dem Multimediainhalte gespeichert sind, wobei der RUI-Server die URI-Informationen und die Protokollinformationen aus dem Medienserver empfängt.

## Revendications

1. Procédé de mise en correspondance de protocoles de contenus audio/vidéo (AV) intégrés stockés par un serveur multimédia (300), le procédé comprenant:
la réception (S210), par un serveur d'interface utilisateur distante (serveur RUI, remote user interface), d'informations d'adresse URI (uniform resource identifier) de contenus AV et d'informations de protocole relatives aux contenus AV en provenance du serveur multimédia (300),
la création, par le serveur RUI (600), de données d'interface utilisateur (données UI, user interface) au moyen des informations d'adresse URI et de protocole reçues,
la transmission (S220) des données UI provenant du serveur RUI auprès d'un client RUI (400),
l'analyse syntaxique (S230), par le client RUI (400), des informations d'adresse URI et des informations de protocole relatives aux contenus AV intégrés dans les données UI,
le stockage (S230), par le client RUI (400), des informations d'adresse URI ayant subi l'analyse syntaxique et des informations de protocole ayant subi l'analyse syntaxique, dans une unité à mémoire cache (200) du client RUI (400),
la réception, par le client RUI (400), d'une commande de contrôle relative aux contenus AV en provenance d'un utilisateur,
l'extraction (S240), par le client RUI (400), d'informations de protocole correspondant aux contenus AV, hors de l'unité à mémoire cache (200),
la transmission (S240), par le client RUI, de la commande de contrôle et des informations de protocole extraites, auprès d'un point de contrôle (PC) AV,
l'obtention (S250), par le PC AV (500), d'informations de protocole relatives aux contenus AV en provenance d'un moteur de rendu multimédia,
la réalisation (S250), par le PC AV, d'une opération de mise en correspondance de protocoles dans laquelle les informations de protocole obtenues sont comparées aux informations de protocole reçues en provenance du client RUI (400), et
la récupération, par le PC AV (500), des contenus AV provenant du serveur multimédia (300) et la lecture des contenus AV récupérés en fonction du résultat de l'opération de mise en correspondance;
ledit PC AV et ledit moteur de rendu multimédia étant mis en œuvre sous la forme d'un premier dispositif unitaire, ledit PC AV et ledit client RUI étant mis en œuvre sous la forme d'un deuxième dispositif, ou bien ledit PC AV, ledit client RUI et ledit moteur de rendu multimédia étant mis en œuvre sous la forme d'un troisième dispositif unitaire, et
ledit serveur RUI et ledit serveur multimédia étant mis en œuvre sous la forme d'un quatrième dispositif unitaire.

2. Procédé selon la revendication 1, dans lequel est employé un système selon la revendication 6.

3. Procédé selon la revendication 1 ou 2, dans lequel la réception des informations d'adresse URI relatives aux contenus AV comprend la réception des informations d'adresse URI et des informations de protocole en provenance d'un serveur multimédia, dans lequel sont stockés des contenus multimédias, au moyen du serveur RUI.

4. Procédé selon la revendication 1, 2 ou 3, dans lequel le client RUI présente au moins une liste de profils dans une balise représentant des informations concernant le client RUI, et chacune des listes de profils comprend des informations de profil ui, audio et vidéo, et/ou dans lequel les informations de profil de la vidéo comprennent le nom du profil, le rapport d'aspect et le transport.

5. Procédé selon l'une quelconque des revendications 1 à 4, dans lequel l'analyse syntaxique des informations d'adresse URI et des informations de protocole relatives aux contenus AV comprend la génération d'une mémoire cache et le stockage des informations d'adresse URI et des informations de protocole dans la mémoire cache sous la forme d'une table de mappage au moyen du client RUI, et les informations de protocole sont divisées en protocole, réseau, format et info supplémentaire et stockées en conséquence.

6. Système de mise en correspondance de protocoles de contenus audio/vidéo (AV) intégrés, le système comprenant:
un serveur d'interface utilisateur distante (serveur RUI, remote user interface) (600) qui reçoit des informations d'adresse URI (uniform resource identifier) de contenus AV intégrés dans des données d'interface utilisateur (données UI, user interface) et des informations de protocole relatives aux contenus AV,
un client RUI (400) qui reçoit les données UI en provenance du serveur RUI (600), les données UI étant créées au moyen des informations d'adresse URI et des informations de protocole, et
un point de contrôle (PC) AV qui reçoit les informations de protocole et une commande de demande de contrôle relative aux contenus AV en provenance du client RUI (400), met en correspondance des informations de protocole obtenues en provenance d'un moteur de rendu multimédia (500) avec les informations de protocole reçues en provenance du client RUI simultanément, et réalise une opération de contrôle sur les contenus AV;
ledit client RUI (600) comprenant une unité à mémoire cache (200) qui effectue une analyse syntaxique des informations d'adresse URI et des informations de protocole relatives aux contenus AV intégrés dans les données UI reçues en provenance du serveur RUI, et stocke les informations d'adresse URI et les informations de protocole,
ledit PC AV et ledit moteur de rendu multimédia étant mis en œuvre sous la forme d'un premier dispositif unitaire (500),
ledit PC AV et ledit client RUI étant mis en œuvre sous la forme d'un deuxième dispositif unitaire, ou ledit PC AV, ledit client RUI et ledit moteur de rendu multimédia étant mis en œuvre sous la forme d'un troisième dispositif unitaire, et
ledit serveur RUI (600) et ledit serveur multimédia (300) étant mis en œuvre sous la forme d'un quatrième dispositif unitaire,
le système comprenant en outre un serveur multimédia dans lequel sont stockés des contenus multimédias, ledit serveur RUI recevant les informations d'adresse URI et les informations de protocole en provenance du serveur multimédia.
